# EUROPÄISCHE PATENTANMELDUNG

(11) **EP 1 043 509 A2**
(43) Veröffentlichungstag der Anmeldung: **11.10.2000**
(21) Anmeldenummer: 00106505.1
(22) Anmeldetag: 25.03.2000
(51) Int. Cl.: F16C 11/10

(54) **Gelenk zur Bildung eines Rahmens**

(30) Priorität: 03.04.1999 DE 29906095 U
(71) Anmelder: WANZL METALLWARENFABRIK GMBH, D-89336 Leipheim (DE)
(72) Erfinder: Heinisch, Klaus, 86513 Ursberg (DE)

(57) **Zusammenfassung**

Die Erfindung betrifft ein Gelenk (1) zur Bildung eines Rahmens, mit einem Gelenkunterteil (3) und mit einem Gelenkoberteil (2), die auf einer gemeinsamen Achse (4) gelegen lösbar miteinander verbunden sind, wobei das Gelenkoberteil (2) und das Gelenkunterteil (3) jeweils wenigstens einen Befestigungsabschnitt (5) zur Aufnahme eines Rahmenteiles (15) aufweist.

Die Erfindung zeichnet sich dadurch aus, dass das Gelenkoberteil (2) und das Gelenkunterteil (3) Hohlräume (9, 10) aufweisen, dass jeweils ein Hohlraum (9) des Gelenkoberteiles (2) in eine deckungsgleiche Lage mit einem der Hohlräume (10) des Gelenkunterteiles (3) bringbar ist und dass jeweils eines der so herstellbaren Hohlraumpaare (11) durch ein Sperrteil (14) in seiner deckungsgleichen Lage arretierbar ist.

## Beschreibung

Die Erfindung betrifft ein Gelenk zur Bildung eines Rahmens, mit einem Gelenkunterteil und mit einem Gelenkoberteil, die auf einer gemeinsamen Achse gelegen lösbar miteinander verbunden sind, wobei das Gelenkoberteil und das Gelenkunterteil jeweils wenigstens einen Befestigungsabschnitt zur Aufnahme eines Rahmenteiles aufweist.

Mit zwei Gelenken ausgestattete Rahmen werden beispielsweise bei fahrbaren Transportcontainern verwendet, die platzsparend ineinandergeschoben werden können. Durch die beiden Gelenke ist es möglich, dem Rahmen einen von oben betrachtet trapezförmigen Grundriß zu verleihen, dessen längere parallele Seite fehlt oder höher angeordnet ist als die kürzere parallele Seite. Solche Rahmen lassen sich in bevorzugter Weise ineinanderschachteln. Sind die dabei verwendeten Rahmenteile sehr dick, müssen die beiden seitlichen Rahmenteile eines trapezförmigen Rahmens relativ stark gespreizt werden. Sind die eben erwähnten Rahmenteile hingegen dünn und schlank, braucht die Spreizung weniger stark ausgebildet sein. Ähnlich verhält es sich, wenn bei den vorab erwähnten Transportcontainern verschiedene Stapeltiefen berücksichtigt werden müssen. Die Stapeltiefe ist jener Abstand, der sich z.B. dann ergibt, wenn bei zwei ineinandergeschobenen Transportcontainern der Abstand der Vorderseiten der beiden Container gemessen wird. Je nachdem, welche Aufbauten die Rahmen solcher Container aufweisen, hat die eine Sorte Container eine andere Stapeltiefe als die andere Sorte. Ist die Stapeltiefe sehr groß, braucht die Spreizung der seitlichen Rahmenteile nicht sehr stark zu sein. Bei kleiner Stapeltiefe hingegen ist eine stärkere Spreizung anzustreben. Die trapezförmigen Rahmen sollen auch so ausgebildet sein, daß zwischen mehreren ineinandergeschobenen Rahmen kein allzu großes seitliches Spiel herrscht. Zur Bildung solcher Rahmen verwendet man deshalb zwei Gelenke, um die erwähnten technischen Erfordernisse auf einfache Weise beherrschen zu können.

Die Aufgabe der Erfindung besteht darin, ein Gelenk der hier vorliegenden Art so weiterzuentwickeln, daß dessen Gelenkoberteil und dessen Gelenkunterteil auf einfache Weise in verschiedenen festgelegten Positionen gegeneinander arretierbar sind.

Die Lösung der Aufgabe besteht darin, daß das Gelenkoberteil und das Gelenkunterteil Hohlräume aufweisen, daß jeweils ein Hohlraum des Gelenkoberteiles in eine deckungsgleiche Lage mit einem der Hohlräume des Gelenkunterteiles bringbar ist und daß jeweils eines der so herstellbaren Hohlraumpaare durch ein Sperrteil in seiner deckungsgleichen Lage arretierbar ist.

Durch geringfügiges Drehen des Gelenkoberteiles und/oder des Gelenkunterteiles lassen sich Positionen einstellen, bei welchen jeweils ein Hohlraum des Gelenkoberteiles mit einem der Hohlräume des Gelenkunterteiles dekkungsgleich ist. Jede aufgefundene Hohlraumpaarung ergibt eine andere Anordnung des Gelenkoberteiles zum Gelenkunterteil. Dies bedeutet, daß auch die Befestigungsabschnitte zueinander unterschiedliche Positionen einnehmen, so daß die auf den Befestigungsabschnitten aufgesetzten Rahmenteile jeweils unterschiedliche Winkel bilden. Es ist zweckmäßig, wenn z.B. die Hohlräume des Gelenkunterteiles als vertikal angeordnete Durchgangsbohrungen und die Hohlräume des Gelenkoberteiles als vertikal angeordnete Sacklochbohrungen gestaltet sind. Dann kann z.B. ein als Stift gestaltetes Sperrteil so weit über eine Durchgangsbohrung hinaus in diese eingeschlagen werden, daß ein Teil des Sperrteiles auch in einer benachbarten Sacklochbohrung Aufnahme findet. Auf diese einfache Weise wird eine Versperrung oder Arretierung der beiden Gelenkhälften (Gelenkoberteil und Gelenkunterteil) erzielt.

Die Erfindung wird anhand eines Ausführungsbeispieles näher erläutert. Es zeigt
Fig. 1 ein Gelenk mit zwei Rahmenteilen;
Fig. 2 das Gelenkoberteil von unten betrachtet;
Fig. 3 das Gelenkunterteil ebenfalls von unten betrachtet sowie
Fig. 4 das Gelenk im Schnitt mit eingesetztem Sperrteil.

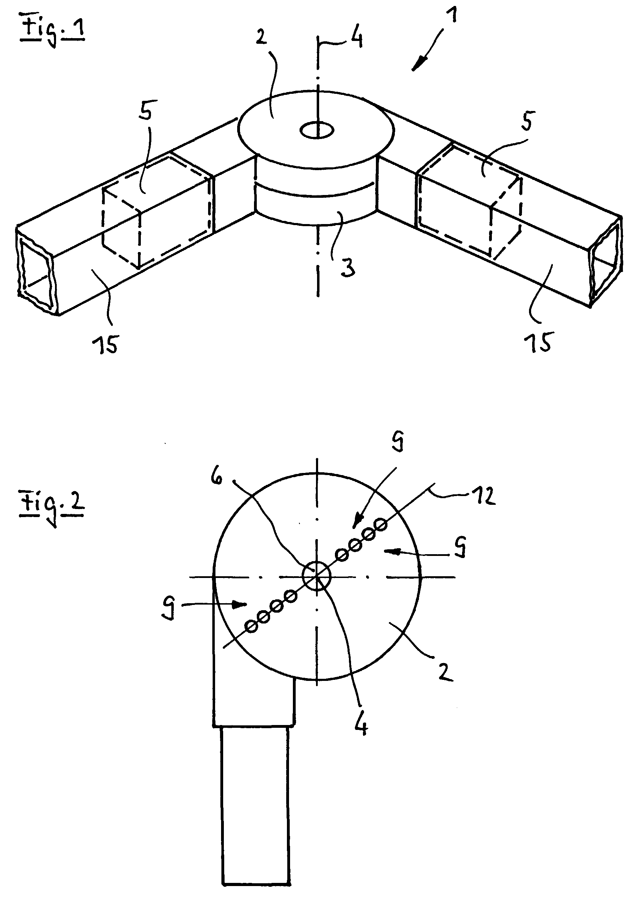

Fig. 1 zeigt das Gelenk 1. Es weist ein Gelenkoberteil 2 und ein Gelenkunterteil 3 auf Im Beispiel sind das Gelenkoberteil 2 und das Gelenkunterteil 3 auf einer gemeinsamen, im Beispiel vertikalen Achse 4 angeordnet. Das Gelenkoberteil 2 und das Gelenkunterteil 3 weisen je einen Befestigungsabschnitt 5 auf An jedem Befestigungsabschnitt 5 ist ein Rahmenteil 15 angeordnet. Eine derartige Baugruppe eignet sich zur Bildung von beliebigen Rahmen, beispielsweise solche mit trapezförmigem Grundriß.

In einer Ansicht von unten nach oben zeigt Fig. 2 das Gelenkoberteil 2. Zu beiden Seiten eines zentralen Durchbruches 6 sind spiegelbildlich zur gemeinsamen, im Beispiel vertikalen Achse 4 jeweils eine gleiche Anzahl von Hohlräumen 9 angeordnet, die im Beispiel als Sacklochbohrungen gestaltet sind, siehe auch Fig. 4. Die Hohlräume 9 liegen auf einer Geraden 12.

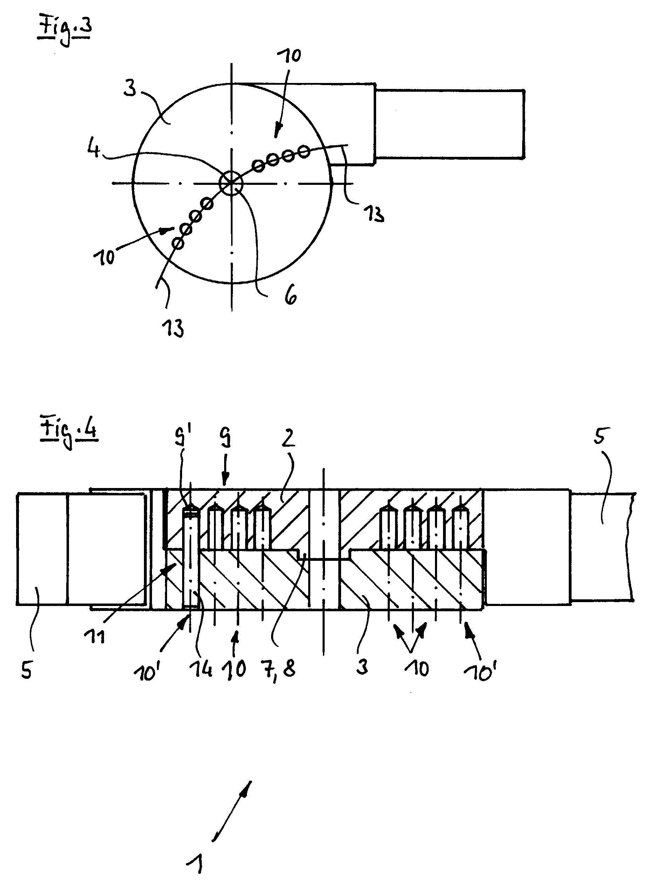

Ebenfalls in einer Ansicht von unten nach oben ist das Gelenkunterteil 3 in Fig. 3 dargestellt. Zu beiden Seiten eines zentralen Durchbruches 6 sind wieder eine Anzahl Hohlräume 10 spiegelbildlich zur vertikalen Achse 4 angeordnet. Allerdings liegen nun die im Beispiel als Durchgangsbohrungen gestalteten Hohlräume 10 auf jeweils einer ungeraden oder gekrümmten Linie 13.

Fig. 4 zeigt das Gelenk 1 im Schnitt. Man erkennt die im Gelenkoberteil 2 befindlichen, als Sacklochbohrungen ausgebildeten Hohlräume 9. Sichtbar ist ferner einer der beiden äußersten Hohlräume 10', die im Gelenkunterteil 3 angeordnet und als Durchgangsbohrungen gestaltet sind. In einem der beiden äußersten Hohlräume 10' des Gelenkunterteiles 3 ist ein Sperrteil 14 in Form eines Stiftes eingesetzt. Das Sperrteil 14 ragt in den deckungsgleichen äußersten Hohlraum 9' des Gelenkoberteiles 2 so, dass das nun entstandene Hohlraumpaar 11 durch das Sperrteil 14 in seiner deckungsgleichen Lage arretiert ist. Im Beispiel sind das Gelenkoberteil 2 und das Gelenkunterteil 3 so zueinander angeordnet, dass deren Befestigungsabschnitte 5 einen stumpfen Winkel bilden. Schlägt man das Sperrteil 14 in den in der Zeichnung äußerst rechts angeordneten Hohlraum 10' des Gelenkunterteiles 3 bis hinein in den deckungsgleichen Hohlraum 9' im Gelenkoberteil 2, so bilden die beiden Befestigungsabschnitte 5 einen spitzen Winkel. Je nachdem welche deckungsgleichen Hohlräume 9, 10 bzw. 9', 10' man zum Arretieren von Gelenkoberteil 2 und Gelenkunterteil 3 wählt, lassen sich unterschiedliche Winkellagen der Befestigungsabschnitte 5 herstellen. Auf die eingangs erwähnten Transportcontainer übertragen bedeutet dies, dass trapezförmige Rahmen herstellbar sind, deren seitliche Rahmenteile unterschiedlich stark gespreizt sind. Das Gelenkoberteil 2 und das Gelenkunterteil 3 sind über eine zentrale Vertiefung 7 und über einen zentral angeordneten Vorsprung 8, der in die Vertiefung 7 eingreift, exakt geführt.

Je nachdem welche Maßtoleranzen man wählt, ist es möglich, die Hohlräume 9 im Gelenkoberteil ebenfalls als Durchgangsbohrungen zu gestalten. Äquivalente Gestaltungen der Hohlräume 9, 10 werden daher von der Erfindung ebenfalls erfasst.

## Patentansprüche

1. Gelenk (1) zur Bildung eines Rahmens, mit einem Gelenkunterteil (3) und mit einem Gelenkoberteil (2), die auf einer gemeinsamen Achse (4) gelegen lösbar miteinander verbunden sind, wobei das Gelenkoberteil (2) und das Gelenkunterteil (3) jeweils wenigstens einen Befestigungsabschnitt (5) zur Aufnahme eines Rahmenteiles (15) aufweist, dadurch **gekennzeichnet,** dass das Gelenkoberteil (2) und das Gelenkunterteil (3) Hohlräume (9, 10) aufweisen, dass jeweils ein Hohlraum (9) des Gelenkoberteiles (2) in eine deckungsgleiche Lage mit einem der Hohlräume (10) des Gelenkunterteiles (3) bringbar ist und dass jeweils eines der so herstellbaren Hohlraumpaare (11) durch ein Sperrteil (14) in seiner deckungsgleichen Lage arretierbar ist.

2. Gelenk nach Anspruch 1, dadurch **gekennzeichnet,** dass die Hohlräume (9, 10) jeweils spiegelbildlich zur gemeinsamen Achse (4) angeordnet sind.

3. Gelenk nach Anspruch 1 oder 2, dadurch **gekennzeichnet,** dass die Hohlräume (9) des Gelenkoberteiles (2) auf einer Geraden (12) und die Hohlräume (10) des Ge-lenkunterteiles (3) auf einer ungeraden Linie (13) oder umgekehrt angeordnet sind.

4. Gelenk nach einem der Ansprüche 1 bis 3, dadurch **gekennzeichnet,** dass die Hohlräume (9) als Sacklochbohrungen und die Hohlräume (10) als Durchgangsbohrungen oder umgekehrt gestaltet sind.

5. Gelenk nach einem der Ansprüche 1 bis 4, dadurch **gekennzeichnet,** dass das Sperrteil (14) als ein in die Hohlräume (9, 10) einzuschlagender Stift gestaltet ist.
